# EUROPÄISCHE PATENTSCHRIFT

(11) **EP 1 564 161 B1**
(45) Veröffentlichungstag und Bekanntmachung des Hinweises auf die Patenterteilung: **22.10.2008**
(21) Anmeldenummer: 04019575.2
(22) Anmeldetag: 18.08.2004
(51) Int. Cl.: B65G 15/34, B65G 15/56

(54) **Gewebeverstärktes Band zur Beförderung von Nahrungsmitteln**
Conveyor belt for conveying food products, reinforced by fabric
bande transporteuse pour des produits alimentaires, renforcée par du tissu

(30) Priorität: 17.02.2004 US 780483
(43) Veröffentlichungstag der Anmeldung: 17.08.2005
(73) Patentinhaber: FORBO International S.A., 8193 Eglisau/Zürich (CH)
(72) Erfinder: Leighton, Jay Philip, Charlotte, NC 28205 (US); Deal, Natalie B., Statesville, NC 28677 (US)
(74) Vertreter: Scheffler, Jörg

(56) Entgegenhaltungen:
- GB-A- 1 013 081
- US-A- 3 957 091

## Beschreibung

### Hintergrund der Erfindung

Die vorliegende Erfindung betrifft Verbundbahnen und insbesondere gewebeverstärkte Bänder zur Beförderung von in Verarbeitung befindlichen Nahrungsmitteln.

Es ist üblich, in Verarbeitung befindliche Nahrungsmittel auf Förderbändern zu befördern, die polymere Materialien, wie elastomere polymere Materialien, enthalten. In einigen Fällen bestehen die Förderbänder aus gewebten Stoffen, die mit dem polymeren Material beschichtet oder laminiert sind. In anderen Fällen bestehen die Förderbänder aus festen Bahnen des polymeren Materials, die nicht mit Geweben verstärkt sind.

Für ein Förderband, das aus einem gewebten Stoff besteht, der mit polymerem Material beschichtet oder laminiert ist, besteht ein Vorteil darin, dass der Stoffkorpus im Wesentlich ein Dehnen des Bandes verhindert. Andererseits besteht ein Nachteil darin, dass der freiliegende Stoff an den geschnittenen Seitenkanten des Bandes Flüssigkeiten absorbieren kann, die schädliche Mikroorganismen enthalten können. Daher ist es üblich, die geschnittenen Seitenkanten des gewebeverstärkten Bandmaterials, das zur Beförderung von in Verarbeitung befindlichen Nahrungsmitteln verwendet wird, zu versiegeln, so dass die geschnittenen Seitenkanten keine Flüssigkeiten absorbieren. Das Material, das zum Kantenversiegeln verwendet wird, muss ausreichend dick und abriebbeständig sein, so dass es über einen angemessenen Zeitraum nicht verschlissen wird. Von solchen Kantenversiegelungsmaterialien ist bekannt, dass sie sich von ihren Bändern lösen, was von Nachteil ist, da die gelösten Stücke das in Verarbeitung befindliche Nahrungsmittel kontaminieren können.

Bei einem Förderband, das aus einer festen Bahn aus polymerem Material besteht, die nicht gewebeverstärkt ist, ist in vorteilhafter Weise keine Kantenversiegelung erforderlich, da die geschnittenen Seitenkanten des Bandes keine Flüssigkeiten absorbieren. Bänder dieser Art können sich jedoch in nachteiliger Weise dehnen, da sie nicht gewebeverstärkt sind.

Daher besteht ein Bedarf in der Technik an einem verbesserten Material, das auf eine geeignete Breite geschnitten und dann als Förderband in einer Nahrungsmittel verarbeitenden Maschine oder dergleichen verwendet werden kann, ohne die geschnittenen Seitenkante oder -kanten versiegeln zu müssen, und ohne zu starke Dehnung des Bandes.

Durch die US 39 57 091 A ist auch bereits eine Verbundbahn bekannt, bei welcher mehrere der sich in Längsrichtung erstreckenden ersten und zweiten Bereiche der polymeren Bahn in abwechselnden, sich seitlich erstreckenden Serien angeordnet sind, sodass jeder der ersten Bereiche mindestens einen der zweiten Bereiche fortsetzt, in jedem der ersten Bereiche sich mindestens mehrere der Schussfäden seitlich durch den ersten Bereich erstrecken, und sich mindestens mehrere der Kettfäden in Längsrichtung durch den ersten Bereich erstrecken, und in jedem der zweiten Bereiche keiner der Kettfäden der Verbundbahn im zweiten Bereich angeordnet ist, und sich zumindest mehrere Schussfäden seitlich durch den zweiten Bereich erstrecken.

### Kurzdarstellung der Erfindung

Ein Aspekt der vorliegenden Erfindung ist die Bereitstellung einer verbesserten Verbundbahn, die auf eine geeignete Breite geschnitten und dann als Förderband für eine Nahrungsmittel verarbeitenden Maschine oder dergleichen verwendet werden kann, vorzugsweise ohne die geschnittenen Seitenkante oder -kanten versiegeln zu müssen, und vorzugsweise ohne zu starke Dehnung des Bandes.

Gemäß einem Aspekt der vorliegenden Erfindung enthält eine Verbundbahn ein Gewebe, das zumindest teilweise in einer polymeren Bahn eingebettet ist. Das Gewebe schränkt in vorteilhafter Weise die Dehnung der Verbundbahn ein. Als weiterer Vorteil enthält das Gewebe in Längsrichtung verlaufende Kettfäden und seitlich verlaufende Schussfäden, wobei ein oder mehrere Paare von im Wesentlichen beabstandeten, aber dennoch benachbarten Kettfäden vorhanden sind. Bei jedem Paar sind die zwei Kettfäden voneinander mit ausreichendem Abstand entfernt, so dass die Verbundbahn in Längsrichtung geschlitzt oder an einer Position zwischen den Kettfäden und von diesen entfernt geschlitzt oder geschnitten werden kann, um einen oder mehrere Längsabschnitte der Verbundbahn bereitzustellen, die als Förderbänder verwendet werden können. Es liegen die Kettfäden an den geschnittenen Seitenkanten oder den oberen und unteren Oberflächen der Abschnitte der Verbundbahn nicht frei. Daher können die Abschnitte der Verbundbahn in vorteilhafter Weise zum Befördern von Nahrungsmitteln in einer Nahrungsmittel verarbeitenden Maschine oder dergleichen verwendet werden, ohne die geschnittene(n) Seitenkante(n) versiegeln zu müssen.

Gemäß einem Aspekt der vorliegenden Erfindung liegen die Schussfäden an den geschnittenen Seitenkanten der Abschnitte der Verbundbahn frei. Die Schussfäden sind jedoch vorzugsweise und in vorteilhafter Weise Polyester-Monofilamentfäden und die Verbundbahn ist vorzugsweise im Wesentlich frei von ungefüllten Hohlräumen. Daher absorbieren die geschnittenen Seitenkanten in vorteilhafter Weise vorzugsweise keine Flüssigkeiten und müssen nicht versiegelt werden.

Gemäß einem Aspekt der vorliegenden Erfindung sind die Kettfäden auf einen oder mehrere, sich in Längsrichtung erstreckende Bereiche mit Kettfäden der Verbundbahn begrenzt, und jedes Schneiden der Verbundbahn in Längsrichtung erfolgt vorzugsweise in einem oder mehreren, sich in Längsrichtung erstreckenden Bereichen ohne Kettfäden der Verbundbahn. Die Bereiche ohne Kettfäden enthalten keine Kettfäden der Verbundbahn. Es ist bevorzugt, dass mehrere der Bereiche ohne Kettfäden und mit Kettfäden der Verbundbahn in einer sich seitlich erstreckenden Serie angeordnet sind, so dass mehrere Stellen für einen möglichen Längsschnitt bereitgestellt sind. Die Bereiche ohne Kettfäden haben vorzugsweise jeweils eine seitliche Breite, die ausreichend groß ist, so dass lange Abschnitte des Verbundmaterials in Längsrichtung geschnitten/geschlitzt werden können, ohne in einen der Kettfäden zu schneiden und diesen somit freizulegen.

In einer Version der vorliegenden Erfindung enthält jeder Bereich mit Kettfäden nur einen Kettfaden und in anderen Versionen enthält jeder Bereich mit Kettfäden zwei, drei oder mehr Kettfäden. Es ist bevorzugt, dass der Abstand zwischen benachbarten Kettfäden, die sich in demselben Bereich mit Kettfäden befinden, kleiner als die seitliche Breite der Bereiche ohne Kettfäden ist.

Gemäß einem Aspekt der vorliegenden Erfindung verschmelzen alle oder einige der Schussfäden, oder zumindest Teile von einigen oder allen der Schussfäden, mit der polymeren Bahn. Obwohl für alle Ausführungsformen der vorliegenden Erfindung bevorzugt ist, dass die geschnittenen Kanten der Verbundbahn im Wesentlichen für Flüssigkeit undurchlässig sind, kann eine solche Undurchlässigkeit mit dem Verschmelzen der Schussfäden und der polymeren Bahn verstärkt werden. Das heißt, gemäß einem Aspekt der vorliegenden Erfindung sind die geschnittenen Seitenkanten im Wesentlichen für Flüssigkeit undurchlässig und/oder an den geschnittenen Seitenkanten erscheinen keine Schussfäden und/oder die geschnittenen Seitenkanten sind im Wesentlichen homogen.

Die vorangehenden und einige der anderen Aspekte der vorliegenden Erfindung sind in der Folge beschrieben.

### Kurze Beschreibung der Zeichnungen

Nachdem die Erfindung somit in allgemeinen Worten beschrieben wurde, wird nun auf die beiliegenden Zeichnungen Bezug genommen, die nicht unbedingt maßstabgetreu sind, von welchen:
Figur 1 ein schematischer Seitenriss eines Fördersystems nach dem Stand der Technik ist und Figur 1 Merkmale einer beispielhaften Ausführungsform der vorliegenden Erfindung zeigt;
Figur 2 eine Teildraufsicht von oben auf die Verbundbahn ist, die in Abschnitte geschnitten werden kann, die endlos hergestellt und anstelle des Förderbandes von Figur 1 verwendet werden, wobei Phantomlinien schematisch die sich in Längsrichtung erstreckenden Bereiche ohne und mit Kettfäden der Verbundbahn zeigen, und die ursprünglichen, sich in Längsrichtung erstreckenden Seitenkanten der Verbundbahn bereits gemäß der beispielhaften Ausführungsform der vorliegenden Erfindung abgeschnitten wurden;
Figur 3 eine Teildraufsicht von oben auf die Verbundbahn von Figur 2 ist, wobei ein Teil einer polymeren Bahn der Verbundbahn entfernt ist, um ein eingebettetes Gewebe der Verbundbahn freizulegen, wobei Phantomlinien schematisch die Bereiche ohne und mit Kettfäden zeigen;
Figur 4 ein Aufriss eines Teils einer sich in Längsrichtung erstreckenden Seitenkante der Verbundbahn von Figur 2 ist;
Figur 5 eine Aufriss eines Teils einer sich in Längsrichtung erstreckenden Endkante der Verbundbahn von Figur 2 ist;
Figur 6 eine isolierte, schematische, im Wesentlichen vergrößerte Ansicht eines Teils des Gewebes von Figur 3 ist;
Figur 7 schematisch Verfahren und Vorrichtungen zur Bildung der Verbundbahn von Figur 2 und zur Bildung endloser Abschnitte der Verbundbahn (z.B. Endlosförderbänder) gemäß der beispielhaften Ausführungsform der vorliegenden Erfindung zeigt; und
Figur 8 schematisch einen Schritt zum Schneiden/Trennen von Abschnitten der Verbundbahn in Längsrichtung gemäß der beispielhaften Ausführungsform der vorliegenden Erfindung zeigt.

### Ausführliche Beschreibung der Erfindung

Die vorliegenden Erfindungen werden nun in der Folge ausführlicher unter Bezugnahme auf die beiliegenden Zeichnungen beschrieben, in welchen einige, aber nicht alle Ausführungsformen der Erfindungen dargestellt sind. Tatsächlich können diese Erfindungen in vielen verschiedenen Formen ausgeführt werden und sollten nicht auf die Ausführungsformen beschränkt werden, die hier dargelegt sind; vielmehr sind diese Ausführungsformen so bereitgestellt, dass diese Offenbarung gültige gesetzliche Anforderungen erfüllt. Gleiche Bezugszeichen beziehen sich durchgehend auf gleiche Elemente.

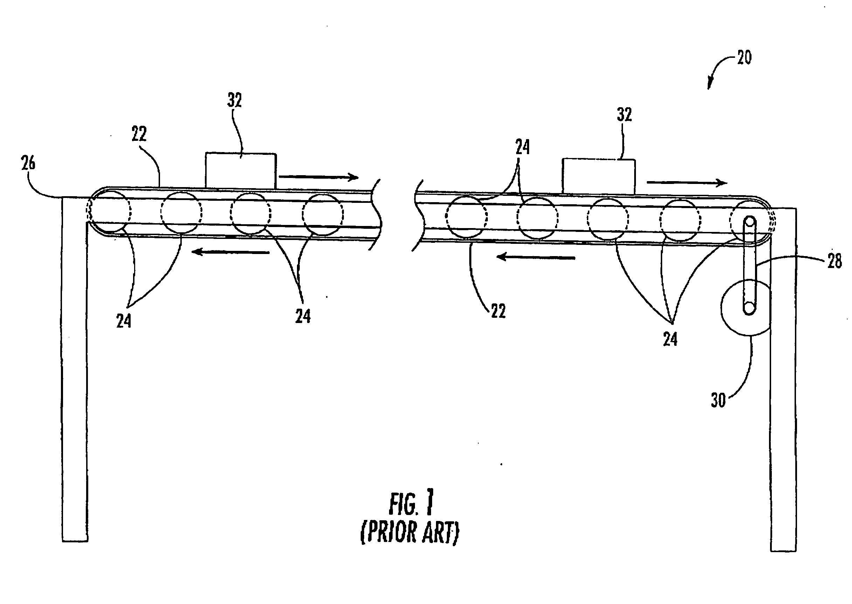

Figur 1 ist eine schematischer Seitenriss von Teilen eines Fördersystems 20 nach dem Stand der Technik und Figur 1 zeigt einige der Merkmale einer beispielhaften Ausführungsform der vorliegenden Erfindung. Das Fördersystem 20 enthält ein Endlosförderband 22, das um mehrere Rollen 24 läuft, die das Förderband tragen und drehbar an einem Gestell 26 befestigt sind. Das Förderband 22 ist endlos, da gegenüberliegende Enden des Bandes an einer Verbindungsstelle verbunden sind, die vorzugsweise die Form einer Spleißstelle aufweist. Wie in Figur 1 dargestellt, wird das Förderband 22 angetrieben, indem eine der Rollen 24 angetrieben wird. Eine oder mehrere der Rollen 24 werden, zum Beispiel durch einen Antriebsriemen 28, von einem Motor 30 angetrieben, der an dem Gestell 26 befestigt ist. Zahlreiche andere Arten von Antriebsmechanismen für das Förderband 22 liegen auch im Umfang der vorliegenden Erfindung. Wie in Figur 1 dargestellt, trägt/transportiert der obere Lauf des Bandes Nahrungsmittel 32 oder dergleichen. Das Fördersystem 20 ist vorzugsweise Teil einer Nahrungsmittel verarbeitenden Maschine, die zum Verarbeiten des Nahrungsmittels 32 dient.

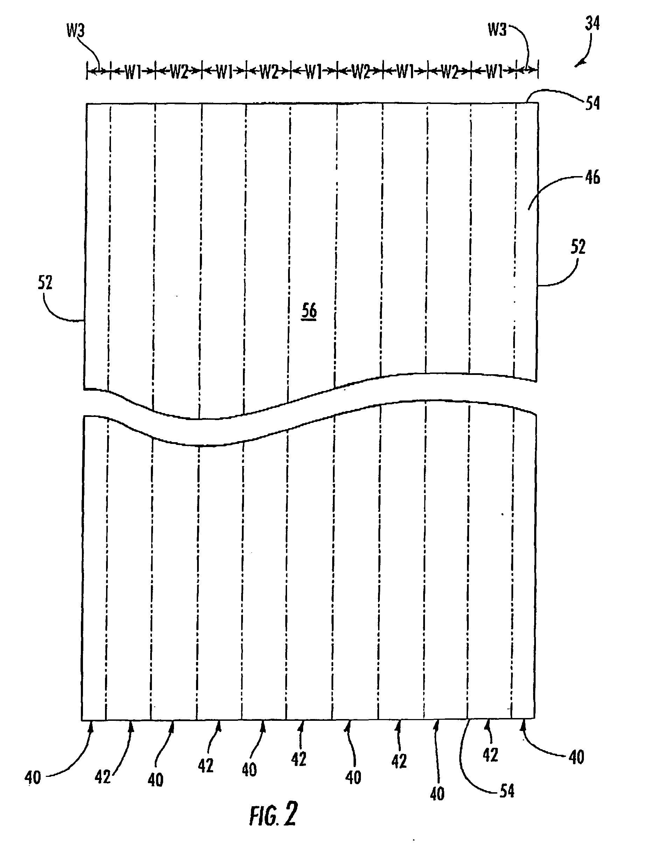

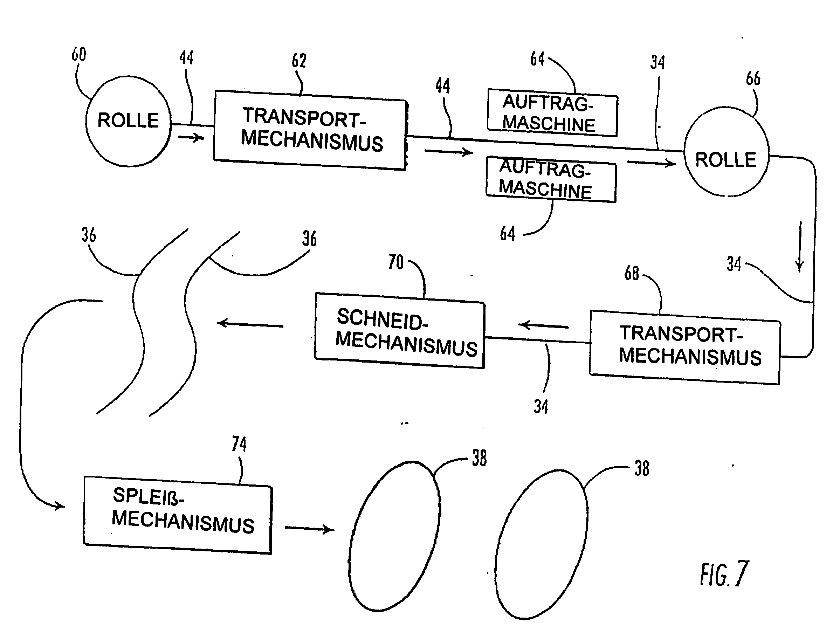

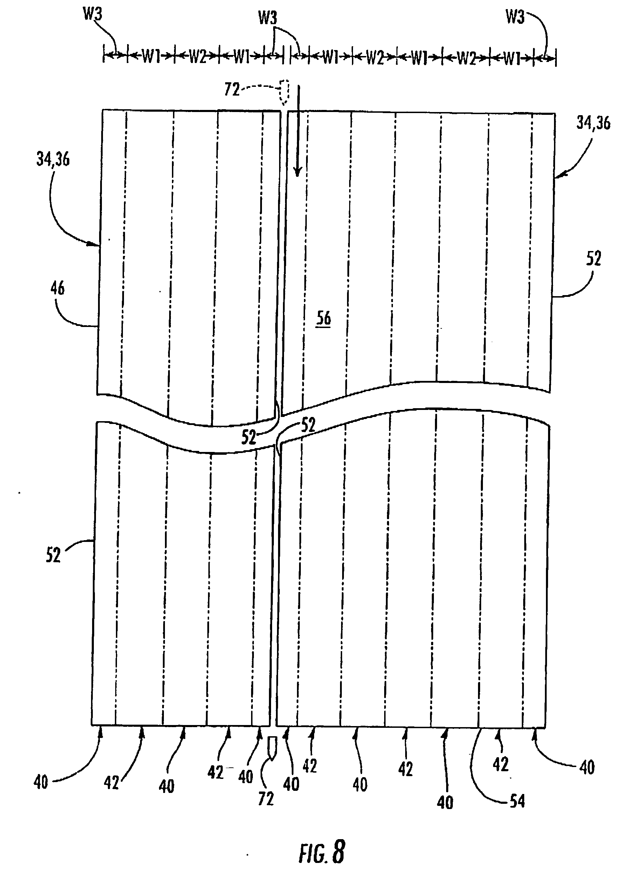

Unter Bezugnahme auf die Draufsicht von oben von Figur 2 ist ein Aspekt der vorliegenden Erfindung eine verbesserte Verbundbahn 34, die in vorteilhafter Weise in Längsrichtung in Abschnitte 36 (Figur 7 und 8) geschnitten werden kann, die zu Endlosbändern 38 (Figur 7) gebildet werden können. Die Endlosbänder 38 können anstelle des Förderbandes 22 von Figur 1 verwendet werden, wie zum Beispiel zum Tragen/Transportieren von zu verarbeitenden Nahrungsmitteln 32 oder dergleichen. Es ist bevorzugt, dass sich jeder derartige Längsschnitt der Verbundbahn 34 innerhalb der sich in Längsrichtung erstreckenden Bereiche ohne Kettfäden 40 (z.B. in Bereichen, die keine Kettfäden enthalten) erstreckt und nicht in sich in Längsrichtung erstreckenden Bereichen mit Kettfäden 42 (z.B. in Bereichen, die Kettfäden enthalten). Die Bereiche 40, 42, die in einer seitlich verlaufenden Serie angeordnet sind, sind in Figur 2 durch Phantomlinien schematisch dargestellt. Für den Durchschnittsfachmann sollte offensichtlich sein, dass die Phantomlinien imaginäre Linien sind, die durch abwechselnd zwei kurze Striche und einen längeren Strich gebildet sind.

Die Verbundbahn 34 ist in der Mitte in Figur 2 gebrochen dargestellt um zu zeigen, dass sie verschiedene unterschiedliche Längen aufweisen kann und dass sie auch verschiedene unterschiedliche Breiten aufweisen kann, wobei die Länge vorzugsweise ein Vielfaches größer als die Breite ist. Insbesondere ist bevorzugt, dass die Verbundbahn 34 in Längen von vielen Fuß hergestellt wird, wie zum Beispiel hundert Fuß oder mehr oder tausend Fuß oder mehr, ohne darauf beschränkt zu sein. Gemäß der beispielhaften Ausführungsform der vorliegenden Erfindung kann die Breite der Verbundbahn 34, die der Abstand zwischen Seitenkanten 52 der Verbundbahn/polymeren Bahn 46 ist, sieben Fuß oder etwas weniger sein, obwohl zahlreiche andere Breiten auch akzeptabel sind.

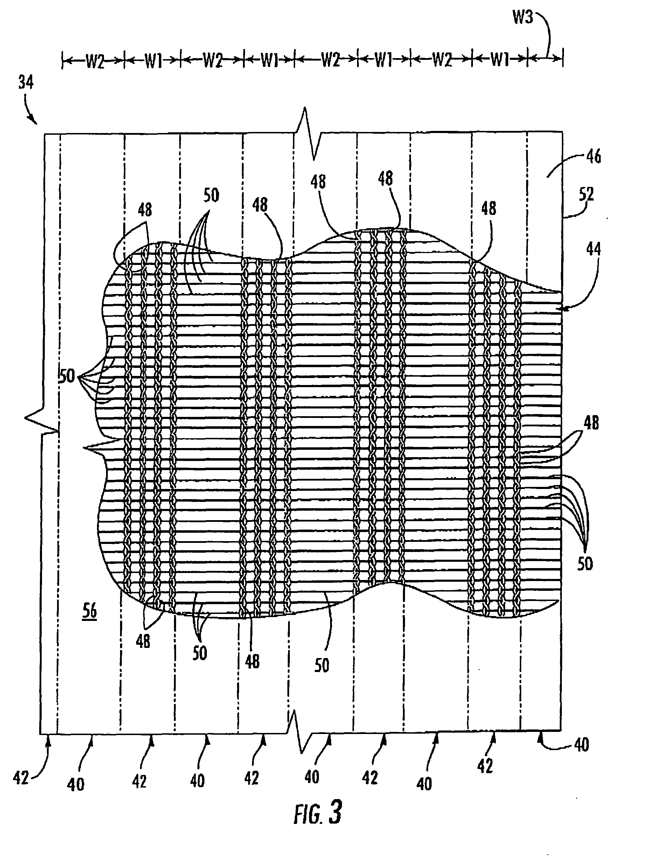

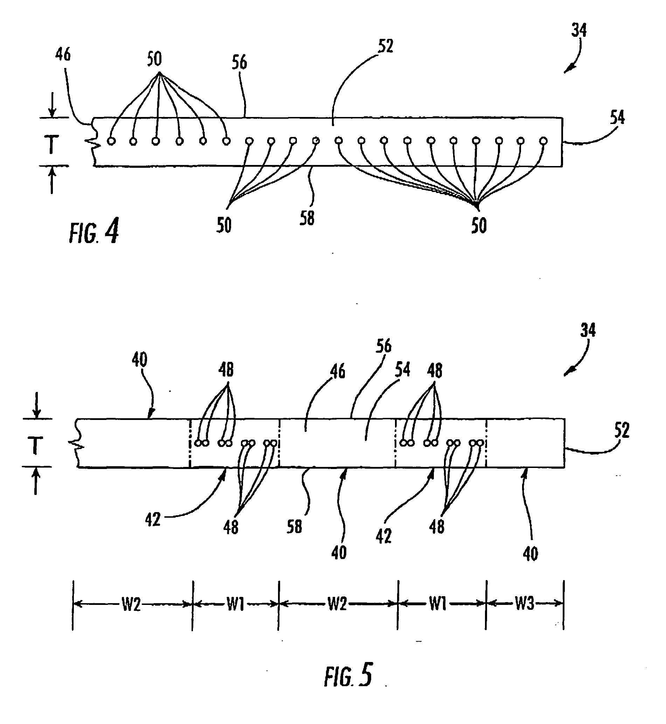

Wie am besten unter Bezugnahme auf Figur 3 erkennbar ist, enthält die Verbundbahn 34 ein Gewebe 44, und besteht vorzugsweise im Wesentlichen aus diesem, das vorzugsweise zumindest im Wesentlichen in einer polymeren Bahn 46 eingebettet ist. Das Gewebe 44 kann so charakterisiert werden, dass es die Bereiche ohne Kettfäden und mit Kettfäden 40, 42 definiert. Figur 3 ist eine Teildraufsicht von oben auf die Verbundbahn 34, wobei ein oberer Teil der polymeren Bahn 46 entfernt ist, um einen Teil des Gewebes 44 freizulegen. Phantomlinien zeigen auch schematisch und teilweise die Bereiche ohne Kettfäden und mit Kettfäden 40, 42 in den Figuren 3 und 5.

Unter Bezugnahme auf Figur 3 enthält das Gewebe 44 vorzugsweise Kettfäden 48, die sich in Längsrichtung erstrecken, und Schussfäden 50, die sich in seitlicher Richtung erstrecken, die zumindest annähernd senkrecht zu der Längsrichtung liegt. In den Figuren sind nur einige repräsentative Fäden 48, 50 jeweils mit ihren Bezugszeichen identifiziert, in dem Bemühen, die Zeichnungen klar zu machen. Gemäß der beispielhaften Ausführungsform der vorliegenden Erfindung enthalten die Bereiche ohne Kettfäden 40 vorzugsweise keine Kettfäden 48, und jeder der Bereiche mit Kettfäden 42 enthält vorzugsweise einen oder mehrere der Kettfäden 48. Gemäß der beispielhaften Ausführungsform der vorliegenden Erfindung erstrecken sich alle Schussfäden 50 in jeden der Bereiche ohne Kettfäden und mit Kettfäden 40, 42 und vorzugsweise erstrecken sich alle Schussfäden vollständig über jeden der Bereiche ohne Kettfäden und mit Kettfäden, insbesondere nachdem ursprüngliche, sich in Längsrichtung erstreckende Seitenkanten der Verbundbahn 34 abgeschnitten sind, wie in der Folge ausführlicher besprochen wird.

Gemäß der beispielhaften Ausführungsform der vorliegenden Erfindung und wie in der Folge ausführlicher besprochen wird, sorgt das Gewebe 44 in vorteilhafter Weise für eine ausreichende Festigkeit in die Kettrichtung, um eine unerwünschte Längsdehnung der Verbundbahn 34 zu verhindern, wobei das Gewebe in vorteilhafter Weise einen angemessenen Raum zwischen den Bereichen mit Kettfäden 42 für ein optimales Schlitzen/Schneiden auf die Breite bereitstellt, und das Gewebe genug Raum zwischen den Schussfäden 50 lässt, so dass das polymere Material der polymeren Bahn 46 ursprünglich um jeden der Schussfäden 50 fließen kann.

Unter Bezugnahme insbesondere auf Figur 2 bis 5 enthält die polymere Bahn 46 vorzugsweise: sich in Längsrichtung erstreckende Seitenkanten 52, die seitlich voneinander beabstandet sind; sich seitlich erstreckende Endkanten 54, die in Längsrichtung voneinander beabstandet sind; und äußere, breite, obere und unter Oberflächen 56, 58, die sich jeweils in Längsrichtung und seitlich zwischen und in Fortsetzung zu den Kanten 52, 54 erstrecken. Gemäß der beispielhaften Ausführungsform der vorliegenden Erfindung sind alle Kett- und Schussfäden 48, 50 des Gewebes 44 zwischen der oberen und unteren Oberfläche 56, 58 angeordnet und keiner der Kett- und Schussfäden liegt an einer der oberen und unteren Oberflächen frei. Zum Beispiel zeigt Figur 2, dass keiner der Fäden 56, 58 des Gewebes 44 an der oberen und unteren Oberfläche 56, 58 frei liegt, da Figur 2 eine Draufsicht sowohl von oben als auch von unten der Verbundbahn 34 zeigt. Wie in Figur 4 dargestellt, liegt vorzugsweise keiner der Kettfäden 48 an einer der Seitenkanten 52 frei, während die Schussfäden 50 vorzugsweise an den Seitenkanten 52 frei liegen. Im Gegensatz dazu und wie in Figur 5 dargestellt, liegen die Kettfäden 48 vorzugsweise an den Endkanten 54 frei.

Gemäß der beispielhaften Ausführungsform der vorliegenden Erfindung liegen die Schussfäden 50 nicht unbedingt an den ursprünglichen Seitenkanten der Verbundbahn 34 frei, aber die ursprünglichen Seitenkanten (nicht dargestellt) werden vorzugsweise abgeschnitten, um die dargestellten Seitenkanten 52 bereitzustellen, an welchen die Schussfäden frei liegen. Das heißt, gemäß der beispielhaften Ausführungsform der vorliegenden Erfindung können die ursprünglichen Seitenkanten der Verbundbahn 34 zackig sein, so dass sie abgeschnitten werden, wodurch die Seitenkanten 52 erhalten werden. Daher liegt eine Vielzahl von Konstruktionen der ursprünglichen Seitenkanten der Verbundbahn 34 im Umfang der vorliegenden Erfindung, da diese ursprünglichen Seitenkanten vorzugsweise weggeschnitten werden. Ebenso werden die dargestellten Endkanten 54 vorzugsweise durch Abschneiden gebildet. Als Alternative und wenn gewünscht, kann besonderes darauf geachtet werden, die ursprünglichen Kanten in einer Weise zu bilden, dass sie nicht abgeschnitten werden müssen.

Unter Bezugnahme auf Figur 4 und 5 definiert die polymere Bahn 46/Verbundbahn 34 vorzugsweise eine Dicke T, die zwischen und im Wesentlichen senkrecht zu der oberen und unteren Oberfläche 56, 58 definiert ist. Gemäß der beispielhaften Ausführungsform der vorliegenden Erfindung ist die Dicke T geringer als etwa 0,4 Inch, insbesondere ist die Dicke etwa 0,04 Inch bis etwa 0,4 Inch und ganz besonders ist die Dicke etwa 0,1 Inch.

Unter Bezugnahme vorwiegend auf Figur 5 hat jeder der Bereiche mit Kettfäden 42 vorzugsweise eine sich seitlich erstreckende Breite W1 und enthält die gesamte Dicke der polymeren Bahn 46, die sich innerhalb der Breite W1 befindet. Gemäß der beispielhaften Ausführungsform der vorliegenden Erfindung ist jede Breite W1 zumindest etwa der Durchmesser eines einzigen der Kettfäden 48, insbesondere ist jede Breite W1 etwa der Durchmesser eines einzigen der Kettfäden 48 bis zu etwa einem Fuß und ganz besonders ist jede Breite W1 etwa 0,5 Inch.

Wie ebenso in Figur 5 dargestellt, hat jeder der inneren Bereiche ohne Kettfäden 40 vorzugsweise eine sich seitlich erstreckende Breite W2 und enthält die gesamte Dicke T der polymeren Bahn 46, die sich innerhalb der Breite W2 befindet, und jeder der äußeren Bereiche ohne Kettfäden 40 hat vorzugsweise eine sich seitlich erstreckende Breite W3 und enthält die gesamte Dicke T der polymeren Bahn 46, die sich innerhalb der Breite W3 befindet. Gemäß der beispielhaften Ausführungsform der vorliegenden Erfindung ist jede Breite W2 größer als oder mindestens etwa 0,5 cm, insbesondere ist jede Breite W2 größer als oder mindestens etwa 0,5 cm bis etwa 1,5 Inch, und ganz besonders ist jede Breite W2 etwa 0,6 Inch. Gemäß der beispielhaften Ausführungsform der vorliegenden Erfindung ist jede Breite W3 größer als oder mindestens etwa 0,15 Inch, insbesondere ist jede Breite W3 größer als oder mindestens etwa 0,15 Inch bis etwa 0,75 Inch, und ganz besonders ist jede Breite W3 etwa 0,5 cm.

Gemäß einer alternativen Ausführungsform der vorliegenden Erfindung sind die Breiten W3 gleich oder etwa gleich den Breiten W2. Tatsächlich können alternative Ausführungsformen der vorliegenden Erfindung Variationen der äußeren Bereiche ohne Kettfäden 40, der sich seitlich erstreckenden Breiten W3 und der sich in Längsrichtung erstreckenden Seitenkanten 52 enthalten, da zum Beispiel in einigen Fällen ein Schlitzen in Längsrichtung (z.B. wie in der Folge unter Bezugnahme auf Figur 8 besprochen) nahe den sich in Längsrichtung erstreckenden Seitenkanten der Verbundbahn 34 nicht notwendig ist. Zum Beispiel können gemäß alternativen Ausführungsformen der vorliegenden Erfindung breite Verbundbahnen nur einen oder sehr wenige Bereiche ohne Kettfäden 40 an einer oder mehreren vorbestimmten Positionen enthalten, die sich nur dort befinden, wo ein Längsschlitzen erwünscht ist. Das erwünschte Längsschlitzen kann mit Abstand zu den sich in Längsrichtung erstreckenden Seitenkanten erfolgen, wie entlang der Mittellinie der Verbundbahn.

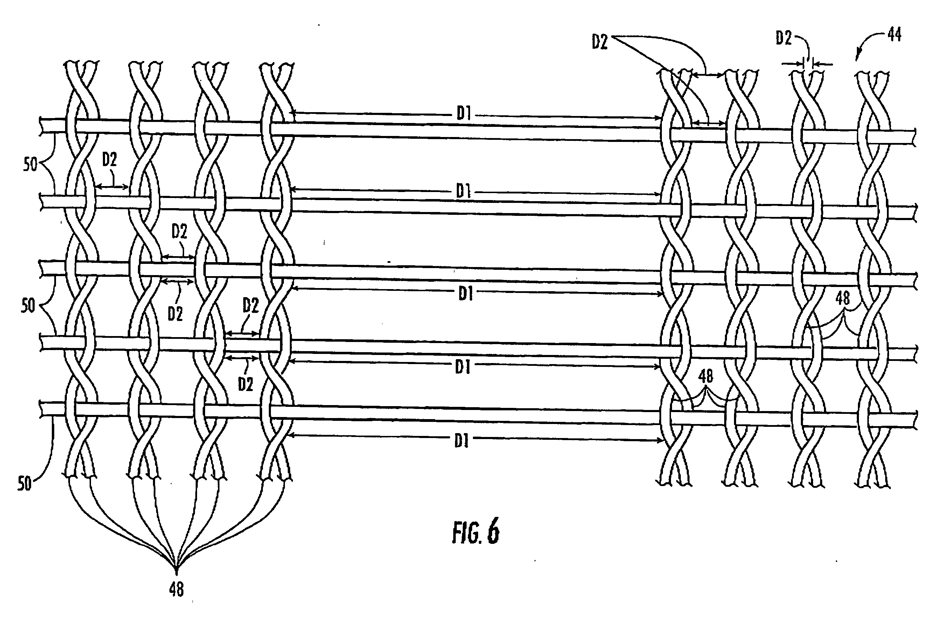

Figur 6 ist eine isolierte, schematische, im Wesentlichen vergrößerte Ansicht eines Teils des Gewebes 44 gemäß der beispielhaften Ausführungsform der vorliegenden Erfindung. Die seitliche Breite W2 (Figur 2, 3 und 5) und jeder innere Bereich ohne Kettfäden 40 (Figur 2, 3 und 5) entspricht vorzugsweise einem Trennungsabstand D1 (Figur 6) zwischen im Wesentlichen beabstandeten, dennoch benachbarten Kettfäden 48, die jeweils zu benachbarten Bereichen mit Kettfäden 42 gehören (Figur 2, 3 und 5). Daher ist jeder Trennungsabstand D1 größer als oder mindestens etwa 0,5 cm, insbesondere ist jeder Trennungsabstand D1 größer als oder mindestens etwa 0,5 cm bis etwa 1,5 Inch und ganz besonders ist jeder Trennungsabstand D1 etwa 0,6 Inch. Gemäß der beispielhaften Ausführungsform der vorliegenden Erfindung ist für Paare benachbarter Kettfäden 48, die sich in demselben Bereich mit Kettfäden 42 befinden, der Trennungsabstand D2 (Figur 6) zwischen den Kettfäden jedes Paares deutlich geringer als der Trennungsabstand D1 zwischen den im Wesentlichen beabstandeten, aber dennoch benachbarten Kettfäden, die jeweils zu benachbarten Bereichen mit Kettfäden 42 gehören.

Wie am besten unter Bezugnahme auf Figur 3 und 6 erkennbar ist, ist bevorzugt, dass die Kett- und Schussfäden 48, 50 eine relativ offene Bindung in den Bereichen mit Kettfäden 42 bilden. Vorzugsweise verhindert die Bindung ein unerwünschtes Rutschen und Verschieben der Fäden 48, 50, und insbesondere ist die Bindung die Dreherbindung. Die Dreherbindung ist eine herkömmliche Bindung, die dem Durchschnittsfachmann bekannt sein sollte. Für den Durchschnittsfachmann sollte offensichtlich sein, dass in einem beispielhaften Dreherbindungsprozess die Kettfäden paarweise angeordnet sind und der Einschuss (d.h., die Schussfäden) gerade über das Gewebe geschossen wird, wie bei einer Grundbindung, mit der Ausnahme, dass die Kettfäden abwechselnd nach rechts und nach links gedreht werden, wobei sie kreuzen bevor jeder Einschussfaden eingesetzt wird. Die Dreherbindung sorgt für Festigkeit und Stärke bei einem Stoff mit offener Bindung, wodurch ein unerwünschtes Rutschen und Verschieben der Fäden verringert wird. Das heißt, gemäß der beispielhaften Ausführungsform der vorliegenden Erfindung sind die Kettfäden 48 vorzugsweise um die Schussfäden 50 in einer Dreherbindung gewoben, so dass in jedem der Bereiche mit Kettfäden 42 vier Paare aus eng benachbarten Kettfäden vorhanden sind, wobei jedes Paar annähernd gleich von dem benachbarten Paar beabstandet ist. Gemäß der beispielhaften Ausführungsform der vorliegenden Erfindung stellt die Dreherbindung eine deutliche Verriegelung der Kett- und Schussfäden 48, 50 bereit, und diese Verriegelung sorgt dafür, dass das Gewebe 44 während des Verfahrens zum im Wesentlichen Einbetten des Gewebes in die polymere Bahn 46 ausreichend stabil ist.

Gemäß der beispielhaften Ausführungsform der vorliegenden Erfindung können die Kettfäden 48 jede Art von Faden sein, der für angemessene Zugfestigkeitseigenschaften sorgt, um vorzugsweise ein unerwünschtes Dehnen der Verbundbahn 34 zu verhindern, und sind vorzugsweise Multifilamentpolyesterfäden. Insbesondere können die Kettfäden 48 Fäden mit einem Denier von ungefähr 500 bis Fäden mit einem Denier von ungefähr 2000 sein, und sind vorzugsweise Multifilamentpolyesterfäden mit einem Denier von ungefähr 1000, die so angeordnet sind, dass jeder Bereich mit Kettfäden 42 acht der Kettfäden enthält. Gemäß der beispielhaften Ausführungsform der vorliegenden Erfindung wird die abwechselnde Anordnung der Bereiche mit Kettfäden und ohne Kettfäden 42, 40 über die gesamte Breite des Gewebes wiederholt, was zu einer durchschnittlichen Zahl von etwa 7,2 Kettfäden 48 pro Inch Breite des Gewebes 44 führt.

Gemäß der beispielhaften Ausführungsform der vorliegenden Erfindung ist eine bedeutende Zahl, insbesondere eine Mehrheit, und ganz besonders die Gesamtzahl der Schussfäden 50 eine Art von Faden, die nicht zum Absorbieren von Flüssigkeit neigt (z.B., massive Polyester-Monofilamentfäden). Insbesondere sind die Schussfäden 50 vorzugsweise Polyester-Monofilamentfäden mit einem Denier von ungefähr 560, die gleichförmig weit genug beabstandet sind, so dass die polymere Bahn im Wesentlichen die Schussfäden einkapselt. Vorzugsweise sind etwa 10 Schussfäden 50 pro Inch Länge des Gewebes 44 vorhanden. Gemäß der beispielhaften Ausführungsform der vorliegenden Erfindung ist das Gewebe 44 als Style Nr. 930202 von Milliken & Company, Spartanburg, South Carolina, erhältlich; das Gewebe 44 kann jedoch jede andere Art von Gewebe sein, dass der Verbundbahn 34 den gewünschten Effekt verleiht.

Figur 7 zeigt schematisch Verfahren und Vorrichtungen zur Bildung der Verbundbahn 34, zum Schneiden der Abschnitte 36 aus der Verbundbahn und zur Herstellung von Endlosbändern 38 aus den Abschnitten gemäß der beispielhaften Ausführungsform der vorliegenden Erfindung. Das Gewebe 44 wird vorzugsweise von einer Rolle 60 abgewickelt und von einem oder mehreren Transportmechanismen 62 befördert, die entlang dem Bewegungspfad des Gewebes 44 und/oder der Verbundbahn 34 angeordnet sind. Das Gewebe 44 wird durch eine Auftragmaschine oder zwischen Auftragmaschinen 64 transportiert. Es kann jede Art von geeigneter Auftragmaschine verwendet werden, die in der Technik zum Beschichten einer breiten Bahn oder eines breiten Textils bekannt ist. In der Auftragmaschine oder zwischen den Auftragmaschinen 64 wird das Gewebe 44 vorzugsweise zumindest im Wesentlichen in der polymeren Bahn 46 eingebettet, um die Verbundbahn 34 zu bilden. Insbesondere können die Auftragmaschinen 64 das Folienextrudieren oder Extrusionskalandern an beiden Seiten des Gewebes 44 anwenden, um das Gewebe zumindest im Wesentlichen in der polymeren Bahn 46 einzubetten. Als Alternative können die Auftragmaschinen 64 jeweils vorgebildete polymere Bahnen an die Seiten des Gewebes laminieren, wobei eine ausreichende Wärme verwendet wird, um die Bahnen so zu erweichen, dass die Bahnen um die Fäden 48, 50 des Gewebes fließen, und die Bahnen an den Kanten des Gewebes und durch die Räume zwischen den Fäden des Gewebes aneinander haften. Gemäß der beispielhaften Ausführungsform der vorliegenden Erfindung ist die polymere Bahn 46 ein elastomeres Material, und insbesondere Polyurethan oder dergleichen.

Als Teil des Beschichtungsprozesses, oder unmittelbar stromabwärts von den Auftragmaschinen 64, kann die Verbundbahn 34 zwischen Kalanderzylindern oder dergleichen hindurchgeleitet werden, um an einer oder beiden der oberen und unteren Oberfläche 56, 58 der Verbundbahn eine Oberflächentextur bereitzustellen, und/oder die Verbundbahn kann zu Kühlungszwecken zwischen gekühlten Rollen hindurchgeleitet werden. Die Verbundbahn 34 wird dann vorzugsweise zu einer Rolle 66 gebildet. Danach, und in einigen Fällen in einer anderen Anlage, wird die Verbundbahn von der Rolle 66 durch einen oder mehrere Transportmechanismen 68 abgewickelt, die entlang dem Bewegungspfad der Verbundbahn angeordnet sind. Bei einem Schneidmechanismus 70 werden Abschnitte 36 von der Verbundbahn 34 abgeschnitten. Gemäß der beispielhaften Ausführungsform der vorliegenden Erfindung werden die Abschnitte 36 sowohl seitlich als auch in Längsrichtung geschnitten.

Wie am besten unter Bezugnahme auf Figur 8 erkennbar ist, werden die Abschnitte 36 mit einer Schlitzmaschine/einem Messer 72 vorzugsweise in Längsrichtung von der Verbundbahn 34 vorzugsweise entlang der Mittellinie eines der Bereiche ohne Kettfäden 40 geschnitten, so dass die Kettfäden 48 an den geschnittenen Seitenkanten 52 der erhaltenen Abschnitte nicht frei liegen, wie in Figur 4 dargestellt. Das heißt, wenn die Verbundbahn 34 auf die Breite geschlitzt/geschnitten wird, bestehen die geschnittenen Seitenkanten 52 der erhaltenen Abschnitte 36 der Verbundbahn vorzugsweise nur aus der polymeren Bahn 46, die die frei liegende Endstücke der Schussfäden 52 umgibt, wie in Figur 4 dargestellt.

Die relative Längsbewegung zwischen dem Messer 72 und der Verbundbahn 34 erleichtert das Schneiden in Längsrichtung mit dem Messer. Diese relative Längsbewegung ist schematisch in Figur 8 mit Hilfe des Messers 72 dargestellt, das sowohl durch volle als auch gestrichelte Linien dargestellt ist. Die Darstellung in gestrichelter Linie des Messers 72 zeigt die Position vor dem Schneiden und die Darstellung in voller Linie des Messers 72 zeigt die Position nach dem Schneiden. Die Verbundbahn 34/Abschnitte 36 sind in Figur 8 in der Mitte gebrochen dargestellt um zu zeigen, dass sie verschiedene unterschiedliche Längen aufweisen können, und sie können auch verschiedene unterschiedliche Breiten aufweisen, wobei die Längen vorzugsweise ein Vielfaches größer als die Breiten sind. Insbesondere ist bevorzugt, dass das Schneiden in Längsrichtung mit dem Messer 72 kontinuierlich ist, wobei der Schnitt sich über mindestens mehrere Fuß erstreckt, und in vielen Situationen erstreckt sich der kontinuierliche Schnitt über zehn Fuß bis fünfzehn Fuß, zwanzig Fuß, dreißig Fuß oder mehr, oder über noch größere Längen, wie zum Beispiel über hundert Fuß oder mehr, ohne darauf beschränkt zu sein.

Zusätzlich oder als Alternative zu der Schlitzmaschine 72, die ein Messer mit einer scharfen Schneidkante ist, kann die Schlitzmaschine 72 eine Ultraschallschneidvorrichtung oder eine andere Art von Schneidvorrichtung sein, die die geschnittenen Seitenkanten 52 in vorteilhafter Weise erwärmt. Zum Beispiel kann in einigen Fällen eine solche Erwärmung, oder eine Erwärmung durch andere Mittel, bewirken, dass die Teile der Schussfäden 50, die nahe den geschnittenen Seitenkanten 52 liegen, und die Teile der polymeren Bahn 46, die nahe den geschnittenen Seitenkanten liegen, in vorteilhafter Weise miteinander verschmelzen, wie in der Folge ausführlicher besprochen wird.

Unter erneuter Bezugnahme auf Figur 7 wird jeder der Abschnitte 36 vorzugsweise an den Enden bei einem Spleißmechanismus 74 verbunden, um ein Endlosband 38 zu bilden. Aus jedem Abschnitt 36 wird ein Endlosband 38 hergestellt, indem die zwei Enden des Abschnittes zusammengebracht und die polymere Bahn 46 an den Enden verschmolzen wird, um eine thermoplastische Spleißstelle zu bilden. Durch derartige Bildung der Spleißstelle liegen die Kettfäden 48 nahe der Spleißstelle in vorteilhafter Weise nicht frei, so dass sie keine Flüssigkeit absorbieren können. Das heißt, gemäß der beispielhaften Ausführungsform der vorliegenden Erfindung sind alle Kettfäden 48 jedes Endlosbandes 38 vollständig in der polymeren Bahn 46 des Endlosbandes 38 eingekapselt. Die Endlosbänder 38 können dadurch und in vorteilhafter Weise anstelle des Förderbandes 22 von Figur 1 zum Transportieren von Nahrungsmitteln 32 während der Verarbeitung von Nahrungsmitteln verwendet werden, vorzugsweise ohne jemals ein Versiegelungsmaterial an die Seitenkanten 52 der Endlosbänder 38 anbringen zu müssen. Gemäß einer alternativen Ausführungsform der vorliegenden Erfindung kann etwas Versiegelungsmittel an den Seitenkanten 52 und/oder anderen Oberflächen der Bänder 38 aufgebracht werden.

Gemäß der beispielhaften Ausführungsform der vorliegenden Erfindung ist zum Beispiel bevorzugt, dass keiner der Kettfäden 48 der Endlosbänder 38 frei liegt, und dass jeder der Bereiche ohne Kettfäden und mit Kettfäden 40, 42 eines Endlosbandes 38 alle Schussfäden 50 des Endlosbandes enthält. Obwohl diese und andere Konfigurationen für die beispielhafte Ausführungsform der vorliegenden Erfindung bevorzugt sind, enthalten alternative Ausführungsformen der vorliegenden Erfindung Variationen der bevorzugten Konfigurationen der beispielhaften Ausführungsform. Zum Beispiel ist gemäß einer Ausführungsform der vorliegenden Erfindung annehmbar, dass einer oder mehrere der Kettfäden 48 eines Endlosbandes 38 an einer Außenfläche des Endlosbandes frei liegen und/oder einer oder mehrere der Schussfäden 50 des Endlosbandes sich nicht in einen oder mehrere der Bereiche ohne Kettfäden und mit Kettfäden 40, 42 des Endlosbandes erstreckt.

Gemäß einer alternativen Ausführungsform der vorliegenden Erfindung wird das Gewebe 44 durch eine andere als die Dreherbindung gewebt. Als ein Beispiel wird angenommen, dass eine andere Art von Bindung in den Bereichen mit Kettfäden 42 verwendet werden könnte, wie zum Beispiel eine Grundbindung, ohne aber darauf beschränkt zu sein. In solchen Situationen kann es günstig sein, die Auftragmaschine(n) 64 unmittelbar stromabwärts und eng neben der Webmaschine zu positionieren, die das Gewebe herstellt, so dass die polymere Bahn 46 an dem Gewebe angebracht wird, während das Gewebe aus dem Webstuhl austritt, ohne das Gewebe zwischen den Schritten der Herstellung des Gewebes und der Bildung der Verbundbahn zu einer Rolle 60 zu wickeln. In dieser alternativen Ausführungsform wird angenommen, dass die polymere Bahn 46 eine relative Bewegung zwischen den Fäden des Gewebes ausreichend begrenzen kann, so dass es nicht notwendig ist, die Dreherbindung zu verwenden.

Tatsächlich enthält gemäß einer Ausführungsform der vorliegenden Erfindung jeder der Bereiche mit Kettfäden 42 nur einen Kettfaden, so dass jeder der Bereiche mit Kettfäden eine Breite von etwa dem Durchmesser der Kettfäden hat; und in dieser Ausführungsform wäre bevorzugt, dass jeder der Bereiche mit Kettfäden alle Schussfäden enthält, und dass die Kett- und Schussfäden jeweils miteinander verschlungen sind, so dass das Gewebe grundgebunden oder in einer anderen geeigneten Weise gebunden ist. In anderen Versionen dieser Ausführungsform könnte jeder der Abschnitte mit Kettfäden zwei, drei oder mehr Kettfäden enthalten und vorzugsweise wäre für jedes Paar benachbarter Kettfäden, die in demselben Bereich mit Kettfäden liegen, der Abstand zwischen den Kettfäden des Paares geringer als der Abstand zwischen benachbarten Bereichen mit Kettfäden; jeder der Bereiche mit Kettfäden enthält alle Schussfäden, und die Kett- und Schussfäden sind jeweils miteinander verschlungen, so dass das Gewebe grundgebunden oder in einer anderen geeigneten Weise gebunden ist.

Obwohl gemäß der beispielhaften Ausführungsform und einigen der anderen Ausführungsformen der vorliegenden Erfindung bevorzugt ist, dass die Fäden des Gewebes jeweils miteinander verschlungen sind, so dass das Gewebe gebunden ist, können andere Arten von Geweben anstelle der gebundenen Gewebe verwendet werden.

Andere alternative Ausführungsformen können jeweils mit jedem der hierin beschriebenen beispielhaften und anderen Ausführungsformen identisch sein, mit Ausnahme der genannten Variationen und Variationen, die für den Durchschnittsfachmann angesichts dieser Offenbarung offensichtlich sind. Gemäß jeder dieser alternativen Ausführungsformen können die Schussfäden 50 des Gewebes 44 von derselben Materialart sein wie die polymere Bahn 46 (z.B. ein Polyesterelastomer oder ein Polyesterurethanelastomer), oder die Materialien des Gewebes 44 und der polymeren Bahn 46 werden auf andere Weise ausgewählt, so dass die Schussfäden 50 oder zumindest einige oder Teile der Schussfäden 50 in die polymere Bahn 46 geschmolzen sind, wenn die polymere Bahn an dem Gewebe 44 aufgebracht wird oder zu einem anderen Zeitpunkt, und die geschmolzenen Schussfäden oder geschmolzenen Teile der Schussfäden werden Teil der polymeren Bahn, so dass die Verbundbahn 34 keine Schussfäden oder eine verringerte Anzahl und/oder Teile der Schussfäden enthält. Zum Beispiel könnte(n) die Auftragmaschine(n) 64 (Figur 7) so betrieben werden, dass während des zuvor beschriebenen Beschichtungsverfahrens die Temperatur der polymeren Bahn 46 über ihrem Schmelzpunkt und dem Schmelzpunkt der Schussfäden 50 liegt. Obwohl es für alle Ausführungsformen der vorliegenden Erfindung bevorzugt ist, dass die geschnittenen Seitenkanten 52 im Wesentlichen für Flüssigkeit undurchlässig sind, kann eine solche Undurchlässigkeit durch Schmelzen der Schussfäden 50 in die polymere Bahn 46 verstärkt werden. Das heißt, gemäß den vorliegenden alternativen Ausführungsformen sind die geschnittenen Seitenkanten 52 im Wesentlichen für Flüssigkeit undurchlässig und/oder es sind keine Schussfäden 50 an den geschnittenen Seitenkanten 52 erkennbar und/oder die geschnittenen Seitenkanten 52 sind im Wesentlichen homogen. Gemäß einer anderen Ausführungsform der vorliegenden Erfindung wird jedes Erscheinen der Schussfäden 50 an den geschnittenen Seitenkanten 52 minimiert, indem die Schussfäden 50 dieselbe Farbe wie die polymere Bahn 46 haben.

In einem Beispiel wird ein heißes Bügeleisen (nicht dargestellt) entlang/neben den geschnittenen Seitenkanten 52 der Verbundbahn 34 mit dem Ziel bewegt, alle Blasen in der polymeren Bahn 46 zu entfernen, die durch das Schneiden der Kanten freigelegt wurde. Zusätzlich könnte das heiße Bügeleisen oder eine andere Erwärmungsvorrichtung verwendet werden, wenn zum Beispiel die Schussfäden 50 des Gewebes 44 von derselben Materialart sind wie die polymere Bahn 46 (oder wenn diese Materialien anders gewählt werden, um das gewünschte Endergebnis zu erreichen), so dass Teile der Schussfäden, die neben den geschnittenen Seitenkanten 52 liegen und die Teile der polymeren Bahn, die neben den geschnittenen Seitenkanten liegen, verschmolzen werden, so dass die geschnittenen Seitenkanten 52 im Wesentlichen für Flüssigkeit undurchlässig sind und/oder keine Schussfäden 50 an den geschnittenen Seitenkanten 52 erkennbar sind und/oder die geschnittenen Seitenkanten 52 im Wesentlichen homogen sind. Als weiteres Beispiel kann das zuvor besprochene Zusammenschmelzen auch erreicht werden, indem die Verbundbahn 34 durch einen erwärmten Walzenspalt geleitet wird, oder durch andere Mittel, um das gewünschte Ergebnis zu erhalten.

Dem Fachmann, den diese Erfindungen betreffen, werden viele Modifizierungen und andere Ausführungsformen der hierin beschriebenen Erfindung in den Sinn kommen, die den Nutzen der Lehre haben, die in der vorangehenden Beschreibung und den beiliegenden Zeichnungen dargelegt wurden. Es versteht sich daher, dass die Erfindung nicht auf die spezifischen offenbarten Ausführungsformen beschränkt ist und Modifizierungen und andere Ausführungsformen im Umfang der beiliegenden Ansprüche enthalten sein sollen. Obwohl hier bestimmte Ausdrücke verwendet wurden, sind sie im allgemeinen und beschreibenden Sinn und nicht als Einschränkung zu verstehen.

## Patentansprüche

1. Verbundbahn, umfassend:
ein Gewebe, das zumindest teilweise in einer polymeren Bahn eingebettet ist, wobei das Gewebe Kettfäden enthält, die sich in Längsrichtung erstrecken, und Schussfäden, die sich in seitlicher Richtung erstrecken, die zumindest annähernd senkrecht zu der Längsrichtung liegt, wobei:
die polymere Bahn enthält:
sich in Längsrichtung erstreckende Kanten, die seitlich voneinander beabstandet sind,
äußere, sich in Längsrichtung erstreckende erste und zweite Oberflächen, die sich seitlich zwischen den Kanten und in Fortsetzung zu diesen erstrecken, und
eine Dicke, die zwischen und im Wesentlichen senkrecht zu der ersten und zweiten Oberfläche definiert ist;
alle Kettfäden der Verbundbahn und alle Schussfäden der Verbundbahn:
zwischen der ersten und zweiten Oberfläche angeordnet sind, und
weder an der ersten noch an der zweiten Oberfläche freiliegen;
mehrere der sich in Längsrichtung erstreckenden ersten und zweiten Bereiche der polymeren Bahn in abwechselnden, sich seitlich erstreckenden Serien angeordnet sind, sodass jeder der ersten Bereiche mindestens einen der zweiten Bereiche fortsetzt,
in jedem der ersten Bereiche:
sich mindestens mehrere der Schussfäden seitlich durch den ersten Bereich erstrecken, und
sich mindestens mehrere der Kettfäden in Längsrichtung durch den ersten Bereich erstrecken; und
in jedem der zweiten Bereiche:
keiner der Kettfäden der Verbundbahn im zweiten Bereich angeordnet ist,
zumindest mehrere Schussfäden sich seitlich durch den zweiten Bereich erstrecken,
der zweite Bereich eine sich seitlich erstreckende Breite hat und die gesamte Dicke der polymeren Bahn enthält, die sich innerhalb der Breite befindet,
die Breite des zweiten Bereichs mindestens 0,5 cm beträgt; und
die paarweise angeordneten Kettfäden jeweils miteinander verschlungen sind, sodass das Gewebe gebunden ist, wobei sie kreuzen bevor jeder Einschussfaden eingesetzt wird.

2. Verbundbahn nach Anspruch 1, wobei alle Schussfäden der Verbundbahn sich in jeden der ersten und zweiten Bereiche erstrecken.

3. Verbundbahn nach Anspruch 1, wobei jeder erste Bereich mindestens drei der Kettfäden enthält.

4. Verbundbahn nach Anspruch 1, wobei mindestens eine Mehrzahl der Schussfäden der Verbundbahn Monofilamentfäden sind.

5. Verbundbahn nach Anspruch 1, wobei keiner der Schussfäden der Verbundbahn an einer der Kanten freiliegt.

6. Verbundbahn nach Anspruch 5, wobei keiner der Kettfäden der Verbundbahn näher als etwa 0,15 Inch zu einer der Kanten liegt.

7. Verbundbahn nach Anspruch 1, wobei die Verbundbahn die Form eines Endlosbandes aufweist.

8. Endlosband nach Anspruch 7, wobei alle Kettfäden des Endlosbandes vollständig in der polymeren Bahn eingekapselt sind.

9. Endlosband nach Anspruch 7, wobei das Endlosband sich um mehrere Rollen erstreckt, die das Band tragen und drehbar an einem Gestell befestigt sind.

10. Verfahren, umfassend:
das vollständige Durchschneiden einer Verbundbahn nach zumindest einem der Ansprüche 1 bis 9 über mindestens mehrere Fuß zur Bildung von mindestens zwei separaten Teilen der Verbundbahn, wobei:
eine Verbundbahn nach einem der Ansprüche 1 bis 9 vorgesehen wird, wobei
das Schneiden in Längsrichtung zwischen einem Paar benachbarter Kettfäden der Verbundbahn in einem oder mehreren, sich in Längsrichtung erstreckenden zweiten Bereichen ohne Kettfäden der Verbundbahn erfolgt, um mindestens mehrere Fuß von sich in Längsrichtung erstreckenden geschnittenen Kanten jedes der Teile zu bilden, sodass keiner der Kettfäden an den geschnittenen Kanten freiliegt.

11. Verfahren nach Anspruch 10, wobei das Schneiden ein derartiges Schneiden enthält, dass keiner der Kettfäden näher als etwa 0,15 Inch zu einer der geschnittenen Kanten liegt.

12. Verfahren nach Anspruch 10, des Weiteren umfassend das Verbinden gegenüberliegender Enden eines der separaten Teile der Verbundbahn zur Bildung eines Endlosbandes.

13. Verfahren nach Anspruch 12, des Weiteren umfassend:
Führen des Endlosbandes um mehrere Rollen, die das Band tragen und drehbar an einem Gestell befestigt sind;
dann Transportieren eines Nahrungsmittelartikels auf dem Endlosband; und
nicht Versiegeln der geschnittenen Kante des Endlosbandes vor dem Transportieren des Nahrungsmittelartikels.

## Claims

1. A composite sheeting, comprising:
a woven fabric which is at least partially embedded in a polymer sheeting, whereby the woven fabric contains warp threads extending in the longitudinal direction and weft threads extending in the transverse direction and are situated at least approximately perpendicular to the longitudinal direction, wherein:
the polymer sheeting comprises:
edges extending in the longitudinal direction, spaced a distance apart from one another laterally,
external first and second surfaces extending in the longitudinal direction, extending between the edges laterally and in continuation thereof, and
a thickness which is defined between and essentially perpendicular to the first and second surfaces;
all warp threads of the composite sheeting and all weft threads of the composite sheeting:
are arranged between the first and second surfaces, and
are not exposed on either the first surface or on the second surface;
several first and second areas of the polymer sheeting extending in the longitudinal direction are arranged in alternating series extending laterally, so that each of the first areas continues at least one of the second areas,
in each of the first areas:
at least several of the weft threads extend laterally through the first area, and
at least several of the warp threads extend in the longitudinal direction through the first area; and
in each of the second areas:
none of the warp threads of the composite sheeting is arranged in the second area,
at least several weft threads extend laterally through the second region,
the second region has a width extending laterally and contains the total thickness of the polymer sheeting, which is within the width,
the width of the second region amounts to at least 0.5 cm; and
the warp threads which are arranged in pairs are intertwined, so that the woven fabric is bound, whereby they intersect before each weft thread is inserted.

2. The composite sheeting according to Claim 1, wherein all the weft threads of the composite sheeting extend in each of the first and second regions.

3. The composite sheeting according to Claim 1, wherein each first region contains at least three of the warp threads.

4. The composite sheeting according to Claim 1, wherein at least a plurality of the weft threads of the composite sheeting are monofilament threads.

5. The composite sheeting according to Claim 1, wherein none of the weft threads of the composite sheeting is exposed on any of the edges.

6. The composite sheeting according to Claim 5, wherein none of the warp threads of the composite sheeting is closer than approximately 0.15 inch from one of the edges.

7. The composite sheeting according to Claim 1, wherein the composite sheeting is in the form an endless belt.

8. The endless belt according to Claim 7, wherein all the warp threads of the endless belt are encapsulated completely in the polymer sheeting.

9. The endless belt according to Claim 7, wherein the endless belt extends around several rolls, which carry the belt and are rotatably mounted on a frame.

10. The method, comprising:
completely severing a composite sheeting according to at least one of Claims 1 to 9 over at least several feet to form at least two separate parts of the composite sheeting, wherein:
a composite sheeting according to any one of Claims 1 to 9 is provided, wherein
the cutting is performed in the longitudinal direction between a pair of neighboring warp threads of the composite sheeting in one or more second regions without warp threads of the composite sheeting, said second regions extending in the longitudinal direction to form at least several feet of cut edges extending in the longitudinal direction of each of the parts, so that none of the warp threads is exposed at the cut edges.

11. The method according to Claim 10, wherein the cutting includes such cutting, so that none of the warp threads is closer than approximately 0.15 inch from one of the cut edges.

12. The method according to Claim 10, additionally comprising the joining of opposing ends of one of the separate parts of the composite sheeting to form an endless belt.

13. The method according to Claim 13, additionally comprising:
guiding the endless belt around several rollers which carry the belt and are rotatably mounted on a frame;
then transporting a food item on the endless belt; and
not sealing the cut edge of the endless belt before transporting the food item.

## Revendications

1. Bande composite, comprenant :
un tissu, qui est au moins partiellement incorporé dans une bande polymère, moyennant quoi le tissu contient des fils de chaîne, qui s'étendent dans la direction longitudinale, et des fils de trame, qui s'étendent dans la direction latérale, qui se situe au moins approximativement perpendiculairement à la direction longitudinale, moyennant quoi :
la bande polymère contient :
des arêtes s'étendant dans la direction longitudinale, qui sont espacées latéralement l'une de l'autre,
une première et une deuxième surface extérieure, s'étendant dans la direction longitudinale, qui s'étendent latéralement entre les arêtes et en continuation de celles-ci, et
une épaisseur, qui est définie entre et essentiellement perpendiculairement à la première et la deuxième surface ;
tous les fils de chaîne de la bande composite et tous les fils de trame de la bande composite :
sont disposés entre la première et la deuxième surface et
ne se trouvent à découvert ni sur la première, ni sur la deuxième surface ;
plusieurs des premières et deuxièmes régions de la bande polymère, s'étendant dans la direction longitudinale sont disposées en séries alternées, s'étendant latéralement, de telle sorte que chacune des premières régions se prolonge au moins dans une des deuxièmes régions,
dans chacune des premières régions :
au moins plusieurs des fils de trame s'étendent latéralement à travers la première région, et
au moins plusieurs des fils de chaîne s'étendent dans la direction longitudinale à travers la première région ; et
dans chacune des deuxièmes régions :
aucun des fils de chaîne de la bande composite n'est disposé dans la deuxième région,
au moins plusieurs des fils de trame s'étendent latéralement à travers la deuxième région,
la deuxième région a une largeur s'étendant latéralement et contient l'épaisseur totale de la bande polymère, qui se trouve à l'intérieur de la largeur,
la largeur de la deuxième région correspond au moins à 0,5 cm ; et
les fils de chaîne disposés par paires sont respectivement enchevêtrés les uns aux autres, de telle sorte que le tissu soit lié, moyennant quoi ils se croisent avant que chaque fil de trame soit passé.

2. Bande composite selon la revendication 1, dans laquelle tous les fils de trame de la bande composite s'étendent dans chacune de la première et la deuxième région.

3. Bande composite selon la revendication 1, dans laquelle chaque première région contient au moins trois des fils de chaîne.

4. Bande composite selon la revendication 1, dans laquelle au moins une pluralité des fils de trame de la bande composite sont des fils monofilament.

5. Bande composite selon la revendication 1, dans laquelle aucun des fils de trame de la bande composite ne se trouve à découvert sur une des arêtes.

6. Bande composite selon la revendication 5, dans laquelle aucun des fils de chaîne de la bande composite n'est situé plus près d'une des arêtes qu'environ 0,15 pouce.

7. Bande composite selon la revendication 1, dans laquelle la bande composite présente la forme d'une bande sans fin.

8. Bande sans fin selon la revendication 7, dans laquelle tous les fils de chaîne de la bande sans fin sont complètement encapsulés dans la bande polymère.

9. Bande sans fin selon la revendication 7, dans laquelle la bande sans fin s'étend autour de plusieurs rouleaux, qui supportent la bande et sont fixés rotativement sur un châssis.

10. Procédé, comprenant :
le découpage complet au travers d'une bande composite selon au moins une des revendications 1 à 9 sur au moins plusieurs pieds afin de former au moins deux parties séparées de la bande composite, moyennant quoi :
une bande composite selon une des revendications 1 à 9 est prévue, dans laquelle
le découpage dans la direction longitudinale entre une paire de fils de chaîne adjacents de la bande composite en une ou plusieurs régions sans fils de chaîne de la bande composite, s'étendant dans la direction longitudinale est effectué, afin de former au moins plusieurs pieds d'arêtes découpées de chacune des parties, s'étendant dans la direction longitudinale, de telle sorte que aucun des fils de chaîne ne se trouve à découvert sur les arêtes découpées.

11. Procédé selon la revendication 10, dans lequel le découpage contient un découpage d'un type tel que aucun des fils de chaîne ne soit situé plus près d'une des arêtes découpées qu'environ 0,15 pouce.

12. Procédé selon la revendication 10, comprenant en outre la liaison des extrémités opposées d'une des parties séparées de la bande composite afin de former une bande sans fin.

13. Procédé selon la revendication 12, comprenant en outre :
le guidage de la bande sans fin autour de plusieurs rouleaux, qui supportent la bande et sont fixés rotativement sur un châssis ;
puis le transport d'un article alimentaire sur la bande sans fin ; et
le non scellement des arêtes découpées de la bande sans fin avant le transport de l'article alimentaire.
